# EUROPÄISCHE PATENTANMELDUNG

(11) **EP 4 550 518 A1**
(43) Veröffentlichungstag der Anmeldung: **07.05.2025**
(21) Anmeldenummer: 23207556.4
(22) Anmeldetag: 02.11.2023
(51) Int. Cl.: H01M 10/42, H01M 50/284, H01M 50/519

(54) **BATTERIE MIT EINEM GEHÄUSE UND EINER MEHRZAHL DARIN ANGEORDNETER, WIEDERAUFLADBARER ELEKTROCHEMISCHER ENERGIESPEICHERELEMENTE**

(71) Anmelder: VARTA Microbattery GmbH, 73479 Ellwangen Jagst (DE)
(72) Erfinder: Deschler, Markus, 86643 Rennertshofen (DE); Faass, Andreas, 86756 Reimlingen (DE); Rauwolf, Andreas, 86742 Fremdingen (DE); Wiedeman, Tristan, 86199 Augsburg (DE); Zander, David, 86720 Nördlingen (DE)
(74) Vertreter: Ostertag & Partner Patentanwälte mbB

(57) **Zusammenfassung**

Es wird eine Batterie (100) mit einem Gehäuse (110, 120) und einer Mehrzahl darin angeordneter, wiederaufladbarer elektrochemischer Energiespeicherelemente (10) mit jeweils einem positiven und einem negativen Pol vorgeschlagen. Die Batterie umfasst eine Leiterplatte (20) sowie ein Batteriemanagementsystem. Die Leiterplatte (20) weist für jedes der Energiespeicherelemente (10) zwei Anschlusskontakte (21) auf, wobei die positiven und die negativen Pole der Energiespeicherelemente (10) über elektrische Leiter (22) mit den Anschlusskontakten (21) verbunden sind.

## Beschreibung

Die vorliegende Erfindung betrifft eine Batterie mit einem Gehäuse und einer Mehrzahl darin angeordneter, wiederaufladbarer elektrochemischer Energiespeicherelemente. Weiterhin betrifft die Erfindung eine Leiterplatte für eine solche Batterie. Die Batterie eignet sich insbesondere zur Stromversorgung eines elektrischen Fahrrads.

### ANWENDUNGSGEBIET UND STAND DER TECHNIK

Fahrräder mit elektromotorischer Unterstützung sind weit verbreitet. Dabei dient der Elektromotor vor allem als Anfahrhilfe und zur Unterstützung der Kurbelbewegung. Es ist aber auch eine vollständige Übernahme des Antriebs durch den Elektromotor möglich. Für die Energieversorgung des Elektromotors wird in der Regel eine Batterie (im Folgenden Fahrradbatterie) verwendet, die eine Mehrzahl von wiederaufladbaren (sekundären) elektrochemischen Energiespeicherelementen, beispielsweise Lithium-Ionen-Zellen, umfasst. Innerhalb der Batterie sind die einzelnen Energiespeicherelemente in der Regel elektrisch miteinander verschaltet. Solche wiederaufladbaren Batterien werden auch als Akkumulatoren bezeichnet.

Für die Aufladung von Fahrradbatterien werden in der Regel Ladegeräte verwendet, die in an einen Haushalts-Stromnetzanschluss angeschlossen werden können. Fahrradbatterien sind meistens als Wechsel-Batterien ausgebildet, die mit geeigneten Steckverbindungen sowohl am Fahrrad als auch an dem Ladegerät mit wenigen Handgriffen angeschlossen werden können.

Fahrradbatterien bzw. Akkumulatoren für Fahrräder umfassen oftmals ein längliches Gehäuse, in welchem die Energiespeicherelemente enthalten sind. Der zur elektrischen Kontaktierung der Batterie notwendige Stecker wird üblicherweise bei der Batteriefertigung in eine Endkappe des Gehäuses eingesetzt. Beispielsweise zeigt die DE 102021211776 B3 einen solchen länglichen Akkumulator, bei dem in eine stirnseitige Endkappe des Gehäuses ein Stecker eingeschraubt ist.

Üblicherweise sind Batterien bzw. Akkumulatoren für Fahrräder so aufgebaut, dass sie eine Mehrzahl von Energiespeicherelementen eines Typs enthalten, die je nach Anforderung seriell und/oder parallel miteinander elektrisch verschaltet sind, um die gewünschte elektrische *Performance* (Leistung, Kapazität) zu realisieren.

Für die serielle und/oder parallele Verschaltung der Energiespeicherelemente untereinander werden oftmals Blechteile (Busbars) verwendet, an die die einzelnen Energiespeicherelemente mittels Widerstandsschweißen angebunden werden. Die Blechteile selbst können an Kabelbäume angeschlossen werden, die über Steckverbindungen mit einer Elektronik, insbesondere mit einem Batteriemanagementsystem, verbunden werden.

Das für derartige Batterien in der Regel erforderliche Batteriemanagementsystem stellt die Schutzelektronik der Batterie dar und regelt alle Sicherheitsfunktionen, wie insbesondere einen Überspannungsschutz, einen Tiefenentladungsschutz, eine Kurzschlusssicherung, einen ÜberStrom-Schutz und einen Temperaturschutz. Darüber hinaus kann das Batteriemanagementsystem zusätzliche Funktionen, wie insbesondere ein *Balancing* zum Ladungsausgleich zwischen einzelnen Energiespeicherelementen, sowie Kommunikationsschnittstellen realisieren.

Neben der Sicherheit der Batterie spielt auch die Größe und das Gewicht bei der Entwicklung einer Fahrradbatterie eine große Rolle, da insgesamt ein verhältnismäßig geringes Gewicht eines elektrischen Fahrrads maßgeblich zu dem Fahrkomfort für den Anwender beiträgt.

Die WO 2019/149699 A1 beschreibt ein Energiespeichermodul für ein Fahrzeugantriebssystem zur Energieversorgung eines Elektromotors in einem Fahrzeug. Die einzelnen Energiespeicherzellen sind zu einem Batteriemodul kombiniert, wobei die Energiespeicherzellen zwischen zwei Verbindungsplatinen angeordnet sind und die beiden Pole der jeweiligen Energiespeicherzellen mit der einen bzw. der anderen Verbindungsplatine mittels eines Leiterstücks elektrisch kontaktiert sind. An einem distalen Ende des so aufgebauten Batteriemoduls befindet sich eine Elektronikplatine, die die Elektronikbauteile eines Batteriemanagementsystems trägt. Die Elektronikplatine ist über Steckverbindungen an die Verbindungsplatinen angeschlossen.

Die WO 2014/203089 A1 beschreibt eine Batterie mit mehreren wiederaufladbaren Zellen in einer Matrix. Diese Batterie umfasst eine Verbindungsplatine in Form einer Leiterplatte mit Leiterbahnen, wobei die Pole der Zellen über verschweißte Kabel, Drähte oder Streifen mit den Leiterbahnen verbunden sind.

### AUFGABE UND LÖSUNG

Vor diesem Hintergrund stellt sich die Erfindung die Aufgabe, eine Batterie mit wiederaufladbaren elektrochemischen Energiespeicherelementen bereitzustellen, die einen besonders kompakten Aufbau zeigt und die insbesondere für die Verwendung als Fahrradbatterie bzw. Fahrradakkumulator geeignet ist. Diese Batterie soll sich dabei durch eine platzsparende und leichte Bauweise auszeichnen, so dass die Batterie in besonders vorteilhafter Weise in ein elektrisches Fahrrad integriert werden kann. Zugleich soll die Batterie allen Anforderungen an einen sicheren und stabilen Betrieb gerecht werden.

Diese Aufgabe wird durch eine Batterie gelöst, wie sie sich aus dem Anspruch 1 ergibt. Vorteilhafte Ausgestaltungen der Batterie sind Gegenstand der von Anspruch 1 abhängigen Ansprüche. Die Aufgabe wird weiterhin durch eine Leiterplatte gelöst, wie sie sich aus dem weiteren unabhängigen Anspruch und, in bevorzugten Ausgestaltungen, aus den von diesem Anspruch abhängigen Ansprüchen ergibt.

Die erfindungsgemäße Batterie weist ein Gehäuse auf, wobei innerhalb des Gehäuses eine Mehrzahl wiederaufladbarer elektrochemischer Energiespeicherelemente angeordnet ist. Die einzelnen Energiespeicherelemente weisen jeweils einen positiven und einen negativen Pol auf. Die Batterie umfasst weiterhin eine Leiterplatte, und vorzugsweise ausschließlich eine Leiterplatte, sowie ein Batteriemanagementsystem. Erfindungsgemäß weist die Leiterplatte für jedes der Energiespeicherelemente zwei Anschlusskontakte auf. Weiterhin sind die positiven und die negativen Pole der einzelnen Energiespeicherelemente über elektrische Leiter mit den Anschlusskontakten der Leiterplatte verbunden.

Bei den Anschluss-Kontakten handelt es sich vorzugsweise um Kupferkontakte mit einer ENIG-Oberfläche aus einer chemisch aufgebrachten Schicht Nickel mit einer dünnen Schicht Gold, welches das Nickel vor Oxidation schützt (ENIG = Electroless Nickel Immersion Gold).

In einer besonders bevorzugten Ausführungsform der erfindungsgemäßen Batterie ist mindestens eines der folgenden zusätzlichen Merkmale vorgesehen:
a. Die elektrischen Leiter sind Drähte.
b. Die Verbindung der positiven und der negativen Pole mit den Anschlusskontakten basiert auf einem Ultraschall-Verschweißen.

Vorzugsweise sind die vorgenannten Merkmale a. und b. in Kombination miteinander realisiert.

Als Alternative zu einem Ultraschall-Verschweißen kann beispielsweise auch ein Laser-Verschweißen verwendet werden. Ein Verschweißen mit Ultraschall hat demgegenüber jedoch den Vorteil, dass es nicht zu einer maßgelblichen Wärmeentwicklung kommt und dass daher mit sehr dünnen Lagen der stromführenden Leiter in der Leiterplatte, insbesondere mit sehr dünnen Kupferlagen, gearbeitet werden kann.

Alternativ zu der Verwendung von Drähten als elektrische Leiter können beispielsweise auch metallische Streifen als elektrische Leiter eingesetzt werden.

Insbesondere erfolgt die Kontaktierung der Energiespeicherelemente mit dem Verfahren des sogenannten *Wirebonding.* Mit diesem Verfahren können die elektrischen Leiter insbesondere in automatisierter Weise an den entsprechenden Kontaktpunkten durch ein Ultraschall-Verschweißen angebracht werden. Dieses Verfahren erlaubt bei der Fertigung der erfindungsgemäßen Batterie einen hohen Grad an Automatisierung. Gleichzeitig wird eine zuverlässige und stabile Kontaktierung der Energiespeicherelemente an der Leiterplatte erreicht. Darüber hinaus erfordert diese Art der Kontaktierung der Energiespeicherelemente nur wenig Bauraum, da auf weitere Kabel- und Steckverbindungen verzichtet werden kann.

Beispielsweise kann die Batterie so ausgebildet sein, dass der Strom in eine Richtung durch die über die Leiterplatte miteinander verschalteten Energiespeicherelemente läuft und über einen in die Leiterplatte integrierten Rückpfad zum Hauptstecker der Batterie, der vorzugsweise an einer Stirnseite des Gehäuses vorgesehen ist, zurückgeführt wird.

In einer besonders bevorzugten Ausführungsform der erfindungsgemäßen Batterie ist mindestens eines der folgenden zusätzlichen Merkmale vorgesehen:
a. Die Verbindung der positiven und der negativen Pole der Energiespeicherelemente mit den Anschlusskontakten der Leiterplatte erfolgt an einer Seite der Energiespeicherelemente.
b. Alle Energiespeicherelemente sind mit gleicher Ausrichtung ihrer Polaritäten nebeneinander in der Batterie angeordnet.

In besonders bevorzugter Weise sind die vorgenannten Merkmale a. und b. gemeinsam miteinander realisiert, so dass sämtliche positiven und negativen Pole der Energiespeicherelemente auf einer Seite der Batterie abgegriffen werden können.

Für diese Ausführungsform der erfindungsgemäßen Batterie eignen sich insbesondere zylindrische Rundzellen, wobei an einer Stirnseite der Rundzellen sowohl der Pluspol als auch der Minuspol abgegriffen werden können. Die Rundzellen können dabei beispielsweise so ausgebildet sein, dass der Pluspol an einer Stirnseite der Rundzellen als zentrale, zylindrische Erhebung auf der Fläche der Stirnseite ausgebildet ist. Der Minuspol wird von der gegenüberliegenden Stirnseite und dem Zellmantel gebildet, wobei der Minuspol auch über die Zellschulter abgegriffen wird, die auf der Seite des Pluspols liegt. Zwischen der Zellschulter und dem auf dieser Stirnseite hervorstehenden Pluspol befindet sich eine elektrische Isolierung, so dass ein Kurzschluss zwischen Pluspol und Minuspol ausgeschlossen ist.

Das vorteilhafterweise verwendete *Wirebonding* eignet sich in besonderer Weise für eine Kontaktierung von Plus- und Minuspol bei derartigen Zellen, indem die elektrischen Leiter in Form von Drähten oder metallischen Streifen an den entsprechenden Stellen der Energiespeicherelemente bzw. der Rundzellen angesetzt, zu den entsprechenden Anschlusskontakten der Leiterplatte geführt und verschweißt werden.

In besonders bevorzugter Weise zeichnet sich die erfindungsgemäße Batterie durch mindestens eines der folgenden zusätzlichen Merkmale aus:
a. Die Energiespeicherelemente sind zylindrische Rundzellen mit zwei Stirnseiten und einer dazwischen liegenden Mantelfläche.
b. Die zylindrischen Rundzellen sind mit paralleler Ausrichtung ihrer jeweiligen Längsachsen nebeneinander ausgerichtet, wobei die Stirnseiten der zylindrischen Rundzellen jeweils eine Fläche aufspannen.
c. Die elektrische Leiterplatte liegt auf einer der von den Stirnseiten der zylindrischen Rundzellen aufgespannten Fläche auf oder ist parallel zu dieser Fläche ausgerichtet.
d. Die Fläche der von den Stirnseiten der zylindrischen Rundzellen aufgespannten Fläche entspricht der aufliegenden oder parallel ausgerichteten Fläche der Leiterplatte.

In besonders bevorzugter Weise sind die vorgenannten Merkmale a. bis d. in Kombination miteinander verwirklicht.

In besonders bevorzugter Weise sind die elektrochemischen Energiespeicherelemente der erfindungsgemäßen Batterie zylindrische Rundzellen, die innerhalb des Gehäuses mit paralleler Ausrichtung ihrer Längsachsen in einer Ebene und gegebenenfalls in mehreren parallelen Reihen angeordnet sind.

Das Verhältnis der Fläche der von den Stirnseiten der zylindrischen Rundzellen aufgespannten Fläche und der darauf aufliegenden oder dazu parallel ausgerichteten Fläche der Leiterplatte beträgt näherungsweise etwa 1:1. Das heißt, dass abgesehen von der im Folgenden noch näher erläuterten Verlängerung der Leiterplatte die Fläche der Leiterplatte und die Fläche der von den Stirnseiten der Energiespeicherzellen aufgespannten Fläche sich einander im Wesentlichen (das heißt beispielsweise ± 10%) entsprechen.

In besonders bevorzugter Weise werden zylindrische Rundzellen mit dem Formfaktor Typ 21700 verwendet. Typ 21700 bezeichnet die bevorzugten Abmessungen der Energiespeicherelemente und bezieht sich auf einen Außendurchmesser von 21 mm und eine Länge von 70 mm.

Besonders bevorzugt sind Lithium-Ionen-Energiespeicherelemente bzw. Lithium-Ionen-Zellen, da Lithium-Ionen-Zellen sich durch eine besonders große Energiedichte bei vergleichsweise niedrigem Gewicht auszeichnen.

Allgemein basieren Lithium-Ionen-Energiespeicherelemente auf dem Einsatz von Lithium, welches in Form von Ionen zwischen den Elektroden des Elements hin und her wandern kann.

Die negative Elektrode und die positive Elektrode eines Lithium-Ionen-Energiespeicherelements werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Elemente kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoOz), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel als Schicht auf einem bandförmige Stromkollektor aufgebracht. Der Stromkollektor stellt dabei eine elektrochemisch inaktive Komponente des Energiespeicherelements dar. Als Stromkollektoren kommen insbesondere metallische Folien zum Einsatz, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Energiespeicherelemente meist Lösungen von Lithiumsalzen wie Lithiumhexafluorophosphat (LiPF₆) in organischen Lösungsmitteln (z. B. Ether und Ester der Kohlensäure).

In zylindrischen Rundzellen sind die Elektroden der Zelle in der Regel in Form eines Wickels angeordnet, wobei zwischen den bandförmigen Elektroden mindestens ein bandförmiger Separator angeordnet ist. In anderen Ausführungsformen, insbesondere bei prismatischen Energiespeicherelementen, können die Elektroden auch in gestapelter Form vorliegen.

In weiteren Ausführungsformen der erfindungsgemäßen Batterie können auch Energiespeicherelemente verwendet werden, die auf einer anderen Zellchemie beruhen, beispielsweise Natrium-Ionen-Zellen oder anderes.

In besonders bevorzugten Ausführungsformen der erfindungsgemäßen Batterie ist mindestens eines der folgenden zusätzlichen Merkmale vorgesehen:
a. Die Leiterplatte umfasst Durchbrechungen, durch die die elektrischen Leiter geführt sind.
b. Die Energiespeicherelemente und die jeweils zugehörigen Anschlusskontakte sind auf entgegengesetzten Seiten der Leiterplatte angeordnet.
c. Die Anschlusskontakte für die Verbindung mit den positiven und negativen Polen der Energiespeicherelemente liegen ausschließlich auf einer Seite der Leiterplatte.
d. Die Seite der Leiterplatte mit den Anschlusskontakten für die Verbindung mit den positiven und negativen Polen der Energiespeicherelemente ist diejenige Seite der Leiterplatte, die den Energiespeicherelementen abgewandt ist.
e. Je zwei mit einem Energiespeicherelement verbundene elektrische Leiter sind durch eine Durchbrechung geführt.
f. Die Durchbrechungen weisen eine Fläche in einem Bereich von 25 mm² bis 100 mm² auf.

In besonders bevorzugter Weise sind die vorgenannten Merkmale a. bis e. in Kombination miteinander verwirklicht. In besonders bevorzugter Weise ist zusätzlich das vorgenannte Merkmal f. verwirklicht, da hierdurch die Herstellung der elektrischen Kontakte erleichtert wird, insbesondere im Rahmen eines *Wirebonding-Prozesses.*

Die Ausgestaltung der Leiterplatte der erfindungsgemäßen Batterie mit Durchbrechungen gemäß dem vorgenannten Merkmal a. hat den besonderen Vorteil, dass diese Ausgestaltung eine besondere Flexibilität bei der Ausbildung der Anschlusskontakte auf der Leiterplatte bietet. Insbesondere können in dieser Ausgestaltung sämtliche Anschlusskontakte auf ausschließlich einer Seite (Flachseite) der Leiterplatte gemäß dem vorgenannten Merkmal c. ausgebildet werden, da die elektrischen Leiter durch die Durchbrechungen hindurchgeführt und auf der entsprechenden Seite der Leiterplatte angeschlossen werden können.

Die Durchbrechungen können insbesondere so ausgebildet sein, dass pro Energiespeicherelement eine Durchbrechung vorgesehen ist. Die mit dem Minuspol und mit dem Pluspol kontaktierten elektrischen Leiter eines Energiespeicherelements können durch die Durchbrechung geführt und auf der Seite der Leiterplatte, die von der Anordnung der Energiespeicherelemente abgewandt ist, mit den entsprechenden Anschlusskontakten der Leiterplatte elektrisch kontaktiert werden.

Die Durchbrechungen können als Löcher in der Leiterplatte in Erscheinung treten, beispielsweise mit einer rechteckigen oder runden Form. Es ist auch möglich, dass sich die Durchbrechungen in einem randständigen Bereich der Leiterplatte befinden, sodass es sich bei diesen Durchbrechungen um Aussparungen (Ausschnitte) im Randbereich, aber nicht um abgeschlossene Löcher handelt.

Vorzugsweise weisen die Durchbrechungen eine Mindestgröße von 25 mm² auf. Diese Mindestgröße ist besonders vorteilhaft, da hierdurch der Schweißvorgang zur Kontaktierung der elektrischen Leiter erleichtert wird. In besonders bevorzugter Weise liegt die Fläche der Durchbrechungen gemäß dem vorgenannten Merkmal f. in einem Bereich von 25 mm² bis 100 mm². Diese Flächengröße der Durchbrechungen ist besonders für zylindrische Rundzellen mit einem Formfaktor Typ 21700 als Energiespeicherelemente geeignet ist.

Im Hinblick auf das Gehäuse der erfindungsgemäßen Batterie zeichnet sich die Batterie vorzugsweise durch mindestens eines der folgenden zusätzlichen Merkmale aus:
a. Das Gehäuse der Batterie weist eine quaderförmige Grundform, insbesondere eine quaderförmige Grundform, mit mindestens vier Längsseiten und einer ersten und einer zweiten Stirnseite auf.
b. Die erste Stirnseite ist von einem endkappenförmigen Steckerbauteil gebildet.

Vorzugsweise sind die vorgenannten Merkmale a. und b. in Kombination miteinander verwirklicht.

Allgemein eignet sich eine Grundform mit vier oder mehr Längsseiten, insbesondere eine quaderförmige Grundform mit vier Längsseiten, für verschiedene Anwendungen der erfindungsgemäßen Batterie, insbesondere beispielsweise für eine Verwendung als Fahrradbatterie. Eine quaderförmige Grundform kann auch abgewandelt werden und beispielsweise abgekantete Längsseiten aufweisen, sodass beispielsweise eine Grundform mit sechs oder acht Längsseiten und zwei Stirnseiten ausgebildet wird.

Über das endkappenförmige Steckerbauteil kann die elektrische Verbindung beispielsweise mit dem Fahrrad oder einem anderen Verbraucher und wechselweise mit einem Ladegerät in an sich bekannter Weise hergestellt werden.

Darüber hinaus weist das Gehäuse vorzugsweise Rastmittel oder Ähnliches auf, mit dem die Batterie beispielsweise am Rahmen eines Fahrrads oder Ähnlichem befestigt werden kann.

Im Hinblick auf vorteilhafte Ausgestaltungen des Gehäuses der erfindungsgemäßen Batterie zeichnet sich die Batterie bevorzugt durch mindestens eines der folgenden zusätzlichen Merkmale aus:
a. Das Gehäuse umfasst eine metallische Röhre.
b. Das Gehäuse umfasst eine Röhre aus Aluminium.
c. Das Gehäuse umfasst eine metallische Röhre mit einem rechteckigen Querschnitt.

Vorzugsweise sind die vorgenannten Merkmale a. und b. und, besonders bevorzugt, die vorgenannten Merkmale a. bis c. in Kombination miteinander realisiert.

Ein metallisches Gehäuse hat den Vorteil, dass hierdurch eine besondere Stabilität der Batterie erreicht wird. Eine solche Stabilität wird regelmäßig bei einer Batterie beispielsweise für ein elektrisches Fahrrad bereits aus Sicherheitsgründen gefordert.

Aluminium eignet sich besonders, da hierdurch das Gewicht der resultierenden Batterie verhältnismäßig niedrig gehalten werden kann. Darüber hinaus hat Aluminium den weiteren Vorteil, dass es gute Wärmeabführungseigenschaften aufweist, die für die erfindungsgemäße Batterie vorteilhaft sind.

Besonders bevorzugt ist ein Gehäuse mit einer länglichen Grundform und einem rechteckigen Querschnitt, wobei das Gehäuse vorzugsweise von einer metallischen Röhre mit einem rechteckigen (gegebenenfalls näherungsweise quadratischem) Querschnitt und zwei Endkappen, vorzugsweise aus Kunststoff, gebildet wird. Eine solche Form des Gehäuses gewährleistet zum einen eine hohe Stabilität und bietet zum anderen vorteilhafte Möglichkeiten zur Anordnung der Energiespeicherelemente innerhalb des Gehäuses. Die längliche Form macht die Batterie weiterhin insbesondere für die Verwendung als Fahrradbatterie geeignet, da ein solches längliches Gehäuse in vorteilhafter Weise am oder im Bereich des Rahmens eines Fahrrads angebracht werden kann.

In einer besonders bevorzugten Ausführungsform der erfindungsgemäßen Batterie ist mindestens eines der folgenden zusätzlichen Merkmale vorgesehen:
a. Im Bereich der ersten Stirnseite befindet sich innerhalb des Gehäuses eine Verlängerung der Leiterplatte, die in einem Winkel in einem Bereich von 80° bis 100°, insbesondere 90°, umgebogen ist.
b. Das endkappenförmige Steckerbauteil ist rückwärtig mit der Verlängerung der Leiterplatte elektrisch kontaktiert.
c. In das endkappenförmige Steckerbauteil ist eine Ladezustands-Anzeige und/oder ein *Touch Button* integriert.

In besonders bevorzugter Weise sind die vorgenannten Merkmale a. und b. in Kombination miteinander verwirklicht. In weiter bevorzugten Ausführungsformen sind die vorgenannten Merkmale a. bis c. in Kombination miteinander verwirklicht.

Bei der für die erfindungsgemäße Batterie verwendeten Leiterplatte handelt es sich vorzugsweise um eine flexible Leiterplatte, die eine Biegung der Leiterplatte im stirnseitigen Bereich des Gehäuses erlaubt. Zu diesem Zweck kann es beispielsweise vorgesehen sein, dass das Material der Leiterplatte im Biegebereich dünner ausgebildet ist als im übrigen Bereich der Leiterplatte, beispielsweise durch Ausfräsung. Prinzipiell können hierfür übliche Flex-Leiterplatten verwendet werden, die vorzugsweise in einem Winkel von etwa 90° abgebogen werden können.

Vorteilhafterweise werden sowohl der Strom als auch sensorische Signale über die Biegung bis zum stirnseitigen Bereich der Leiterplatte, also bis zur Verlängerung der Leiterplatte, geführt, um so mit dem endkappenförmigen Steckerbauteil kontaktiert werden zu können. Auf diese Weise können über das endkappenförmige Steckerbauteil sowohl die Spannung (Hauptspannung und ggf. Nebenspannung(en)) abgegriffen als auch andere Funktionen der Batterie angezeigt und/oder betätigt werden.

Die generelle Dicke der Leiterplatte kann beispielsweise in einem Bereich zwischen 1 bis 2 mm liegen, beispielsweise 1,4 mm. Im ausgedünnten Biegebereich kann die Dicke der Leiterplatte dann so reduziert sein, dass die Dicke beispielsweise in einem Bereich zwischen 0,2 und 0,3 mm liegt, beispielsweise bei 0,24 mm. Dies erlaubt ein Umbiegen der Leiterplatte in diesem Bereich beispielsweise in einem rechten Winkel, so dass die umgebogene Verlängerung der Leiterplatte parallel zur Stirnseite des Gehäuses ausgerichtet werden kann. Diese Dicke ist gleichzeitig ausreichend, um den Strom und weitere Signale über den gebogenen Bereich zu führen. Im Anwendungsfall einer Fahrradbatterie sollte der Strom in diesem Bereich beispielsweise mit maximal 19,5 A geführt werden können, was in dieser Ausgestaltung der Leiterplatte ohne weiteres möglich ist.

In besonders bevorzugten Ausführungsformen können in das endkappenförmige Steckerbauteil eine Ladezustands-Anzeige und/oder ein *Touch Button* gemäß dem vorgenannten Merkmal c. integriert sein.

Prinzipiell ist es auch möglich, dass die Leiterplatte eine weitere Verlängerung aufweist, die beispielsweise im Bereich der anderen Stirnseite des Gehäuses und/oder auf der gegenüberliegenden Seite des Gehäuses liegt. Prinzipiell können auch an dieser weiteren Seite des Gehäuses beispielsweise Kontaktierungen mit den Energiespeicherelementen oder andere Kontakte vorgesehen sein.

In einer besonders bevorzugten und vorteilhaften Ausführungsform der erfindungsgemäßen Batterie ist das folgende zusätzliche Merkmal vorgesehen:
a. Das Batteriemanagementsystem umfasst eine Elektronik, die in die Leiterplatte integriert ist.

Durch die Integration der Elektronik für das Batteriemanagementsystem in die Leiterplatte ist ein vollständiger Verzicht auf eine separate Elektronikplatine möglich. Hierdurch wird die Anzahl der Bauteile bei der erfindungsgemäßen Batterie im Vergleich mit herkömmlichen Batterien maßgeblich reduziert, so dass Gewicht, Bauraum und auch die Herstellungskosten deutlich geringer als bei herkömmlichen Batterien ausfallen können. Die einzige Leiterplatte der Batterie führt dabei sowohl die Leistung als auch Messströme und andere Signale, die im Rahmen eines Batteriemanagementsystems erforderlich sind. Auf der einzigen Leiterplatte der erfindungsgemäßen Batterie ist das Batteriemanagementsystem über die elektrischen Leiter, beispielsweise die Drähte, direkt mit den einzelnen Energiespeicherelementen verbunden.

Die Verbünde der einzelnen Energiespeicherzellen, beispielsweise die Parallelverbünde der einzelnen Energiespeicherelemente mit gleichem Potential, können direkt in der Leiterplatte integriert sein. Auf diesem Potential sind ebenfalls die Spannungsmesssignale und gegebenenfalls andere sensorische Signale auf der Leiterplatte integriert. Neben einer Spannungsmessung kann beispielsweise auch eine Temperaturmessung direkt in die Leiterplatte integriert werden. Insofern sind keine weiteren Kabel oder Stecker für diese Funktionen erforderlich.

Im Hinblick auf das Batteriemanagementsystem zeichnet sich die erfindungsgemäße Batterie in bevorzugten Ausführungsformen durch mindestens eines der folgenden zusätzlichen Merkmale aus:
a. Die Elektronik des Batteriemanagementsystems umfasst Mess- und/oder Steuer- und/oder Schutzschaltungen.
b. Die Elektronik des Batteriemanagementsystems umfasst mindestens einen Mikroprozessor zur Ansteuerung der Schaltungen.
c. Die Elektronik des Batteriemanagementsystems umfasst eine Lade- und Entladeelektronik.
d. Die Elektronik des Batteriemanagementsystems umfasst eine Schaltung zur gleichmäßigen Ladungsverteilung zwischen den Energiespeicherelementen.
e. Die Elektronik des Batteriemanagementsystems umfasst mindestens einen Spannungswandler.

In bevorzugten Ausführungsformen sind die Merkmale gemäß den vorgenannten Merkmalen a. bis d. in Kombination miteinander verwirklicht. In besonders bevorzugter Weise ist zusätzlich das vorgenannte Merkmal e. in Kombination mit den Merkmalen a. bis d. vorgesehen.

Im Unterschied zu herkömmlichen Batterien mit einem Batteriemanagementsystem zeichnet sich die erfindungsgemäße Batterie dadurch aus, dass sie mit einer reduzierten Anzahl von Bauteilen realisiert ist und mit ausschließlich einer Leiterplatte sowohl die elektrische Verschaltung der einzelnen Energiespeicherelemente (serielle (S-) und/oder parallele (P-) Verschaltung) als auch die erforderliche elektronische Kontrolle und das elektronische Management realisieren kann. Hierdurch ist im Vergleich mit herkömmlichen Batterien ein deutlich kompakterer und platzsparender Aufbau der Batterie möglich, so dass der Bauraum und das Gewicht der erfindungsgemäßen Batterie im Vergleich mit herkömmlichen Batterien in besonders vorteilhafter Weise reduziert werden können.

Der Spannungswandler gemäß dem vorgenannten Merkmal e. kann insbesondere genutzt werden, um eine oder mehrere Nebenspannungen bereitzustellen, die beispielsweise in einem Spannungsbereich von 8 bis 15 V, vorzugsweise 9 bis 13 V, und besonders bevorzugt bei 12 V liegt. In bevorzugten Ausführungsformen können mehrere Spannungswandler vorgesehen sein, beispielsweise drei Spannungswandler, die drei Kanäle mit beispielsweise 12 V bereitstellen.

Die Hauptspannung der Batterie kann beispielsweise in einem Spannungsbereich von 30 bis 60 V, beispielsweise 48 V, liegen. Ein solcher Spannungsbereich ist insbesondere für elektrische Fahrräder geeignet. Je nach Anwendungsfeld der erfindungsgemäßen Batterie kann die bereitgestellte Hauptspannung auch höher oder niedriger liegen.

Die Nebenspannungen der Batterie können für verschiedene (externe) Funktionen genutzt werden. Bei einem elektrischen Fahrrad können mit den Nebenspannungen beispielsweise eine Beleuchtung, eine Beheizung des Sattels und/oder des Lenkers, Navigation, Radarfunktionen, Airbag oder Ähnliches betrieben werden.

Die Elektronik des Batteriemanagementsystems kann neben den verschiedenen Schutzschaltungen beispielsweise auch eine Logik-Kommunikation realisieren.

Die Anzahl der Energiespeicherelemente in der erfindungsgemäßen Batterie kann je nach Anwendungsbereich der Batterie gewählt werden. Geeignet für eine Fahrradbatterie ist beispielsweise eine Anzahl von 39 Energiespeicherelementen pro Batterie (zylindrische Lithium-Ionen-Rundzellen, Typ 21700). Die 39 Energiespeicherelemente können beispielsweise in drei mechanischen Reihen zu jeweils 13 Zellen angeordnet sein.

Im Hinblick auf den mechanischen Aufbau der erfindungsgemäßen Batterie ist in bevorzugten Ausgestaltungen der Batterie das folgende zusätzliche Merkmal vorgesehen:
a. Die Energiespeicherelemente innerhalb des Gehäuses der Batterie werden von mindestens einem Rahmen aus Kunststoff gehalten bzw. sind darin oder daran angeordnet.

Ein solcher Rahmen hält und fixiert die Energiespeicherelemente innerhalb der Batterie und stabilisiert die Anordnung der Energiespeicherelemente beispielsweise auch bei einem Sturz oder anderen Erschütterungen. Das Kunststoffmaterial des Zellhalters sorgt für ein verhältnismäßig geringes Gewicht der Batterie, so dass ein solcher Zellhalter insbesondere für den Einsatz der Batterie als Fahrradbatterie geeignet ist. Geeignete Kunststoffmaterialien sind dem Fachmann bekannt.

In bevorzugter Weise ist der Zellhalter zweiteilig ausgebildet und umgreift in Form von jeweils einem Rahmen die beispielsweise als zylindrische Rundzellen ausgebildeten Energiespeicherelemente im Bereich ihrer jeweiligen Stirnseiten, wobei die zylindrischen Rundzellen stehend nebeneinander angeordnet sind. Vorzugsweise ist eine Ebene mit einer solchen Anordnung der Rundzellen vorgesehen.

Vorzugsweise sind die Rundzellen innerhalb der Batterie so ausgerichtet, dass die jeweiligen Pluspole nach oben weisen. In diesem Bereich liegt die Leiterplatte auf und wird gegebenenfalls von dem Zellhalterrahmen gestützt. Da die Rundzellen durch den Zellhalter sich in einer fixierten Position befinden und ein Mindestabstand zwischen den Rundzellen gewährleistet ist, bedürfen die Zellen keiner weiteren Isolation einander gegenüber und können beispielsweise ohne einen Schrumpfschlauch verwendet werden. Der Mindestabstand zwischen den Rundzellen gewährleistet darüber hinaus eine gute Belüftung und Wärmeabfuhr.

In besonders bevorzugten Ausführungsformen der erfindungsgemäßen Batterie zeichnet sich die Batterie durch mindestens eines der folgenden zusätzlichen Merkmale aus:
a. Die Batterie ist ein Wechsel-Akkumulator.
b. Die Batterie ist ein Akkumulator für ein elektrisches Fahrzeug.
c. Die Batterie ist ein Akkumulator für ein elektrisches Fahrrad.

Vorzugsweise sind die vorgenannten Merkmale a. und b. und, besonders bevorzugt, die vorgenannten Merkmale a. bis c. in Kombination miteinander realisiert.

In besonders bevorzugter Weise ist die erfindungsgemäße Batterie ein Wechsel-Akkumulator, der mit wenigen Handgriffen an einen elektrischen Verbraucher und wechselweise bei Bedarf an eine Ladeeinrichtung zum Aufladen des Akkumulators angeschlossen werden kann.

Die erfindungsgemäße Batterie kann für grundsätzlich jedes elektrische Fahrzeug eingesetzt werden, beispielsweise für einen elektrischen Roller, einen elektrischen Rollstuhl oder andere elektrische Fahrzeuge. Weiterhin kann die Batterie beispielsweise für die Energieversorgung eines Roboters, beispielsweise eines Serviceroboters oder für Ähnliches, verwendet werden. Weiterhin ist die Batterie auch als Spannungsquelle für elektrische Werkzeuge oder ähnliches einsetzbar.

In besonders bevorzugten Ausführungsformen handelt es sich bei der erfindungsgemäßen Batterie um einen Wechsel-Akkumulator für ein elektrisches Fahrrad. Insbesondere bei einem elektrischen Fahrrad kommen die besonderen Vorteile der erfindungsgemäßen Batterie besonders zum Tragen, da die erfindungsgemäße Batterie für das jeweilige Anforderungsprofil bei der Herstellung des Fahrrads in sehr vorteilhafter Weise konfektioniert werden kann und sich durch ein leichtes Gewicht und einen geringen Platzbedarf auszeichnet.

Die Erfindung umfasst weiterhin eine Leiterplatte für eine Batterie mit einem Gehäuse und einer Mehrzahl darin angeordneter, wiederaufladbarer elektrochemischer Energiespeicherelemente mit jeweils einem positiven und einem negativen Pol. Diese Batterie umfasst weiterhin ein Batteriemanagementsystem. Die erfindungsgemäße Leiterplatte ist dadurch gekennzeichnet, dass die Leiterplatte für jedes der Energiespeicherelemente zwei Anschlusskontakte aufweist, die für einen elektrischen Anschluss der positiven und negativen Pole der Energiespeicherelemente über elektrische Leiter eingerichtet sind.

In besonders bevorzugten Ausführungsformen der erfindungsgemäßen Leiterplatte zeichnet sich die Leiterplatte durch mindestens eines der folgenden zusätzlichen Merkmale aus:
a. Die Leiterplatte umfasst Durchbrechungen, die zum Durchführen der elektrischen Leiter vorgesehen sind.
b. Die Anschlusskontakte für die positiven und negativen Pole der Energiespeicherelemente sind auf ausschließlich einer Seite der Leiterplatte angeordnet.

Infolge der Durchbrechungen in der Leiterplatte können die positiven und negativen Pole der jeweiligen einzelnen Energiespeicherelemente vorzugsweise auf einer Seite der Leiterplatte kontaktiert werden. Durch Hinzufügen oder Weglassen von Kontaktierungen kann dabei die Packverschaltung hinsichtlich der Anzahl der parallel verschalteten Energiespeicherelemente sehr flexibel gestaltet werden.

In weiteren bevorzugten Ausführungsformen zeichnet sich die erfindungsgemäße Leiterplatte weiterhin durch mindestens eines der folgenden zusätzlichen Merkmale aus:
a. Die Leiterplatte weist eine Verlängerung auf, die in einem Winkel in einem Bereich von 80° bis 100°, insbesondere 90°, umgebogen ist, wobei die Verlängerung zur elektrischen Kontaktierung mit der rückwärtigen Seite eines endkappenförmigen Steckerbauteils des Gehäuses vorgesehen ist;
b. In die Verlängerung der Leiterplatte ist eine Elektronik für eine Ladezustands-Anzeige und/oder einen *Touch Button* an der Stirnseite des Gehäuses integriert.

In weiteren besonders bevorzugten Ausführungsformen zeichnet sich die erfindungsgemäße Leiterplatte durch das folgende zusätzliche Merkmal aus:
a. Eine Elektronik für das Batteriemanagementsystem ist in die Leiterplatte integriert.

Diese Merkmale wurden weiter oben bereits im Zusammenhang mit der Beschreibung der erfindungsgemäßen Batterie näher erläutert. Bezüglich dieser bevorzugten Merkmale der Leiterplatte wird daher auch auf die obige Beschreibung verwiesen.

Bei herkömmlichen Batterien ist in der Regel eine zusätzliche Leiterplatte vorgesehen, an die die elektrischen Leiter (beispielsweise *Wirebonds*) angeschweißt werden. Diese Leiterplatte wird üblicherweise mit einer weiteren Leiterplatte (Platine), die das Batteriemanagementsystem trägt, beispielsweise über Kabel oder Stecker verbunden, wobei zusätzliche Messleitungen zum Messen beispielsweise der Spannungen benötigt werden. Im Vergleich mit der erfindungsgemäßen Batterie führt die hierbei erforderliche zusätzliche Leiterplatte und führen die zusätzlich erforderlichen Stecker und Leitungen zu einem höheren Gewicht und erfordern mehr Bauraum.

Im Vergleich mit herkömmlichen Batterien hat die erfindungsgemäße Batterie weiterhin den Vorteil, dass weniger potenzielle Fehlerstellen vorhanden sind und dass die Kosten für die Herstellung der erfindungsgemäßen Batterie durch die Verringerung der Anzahl der Bauteile und die Vereinfachung der Herstellungsprozesse reduziert werden. Insbesondere entfällt bei der erfindungsgemäßen Batterie eine zusätzliche Leiterplatte zum Anschweißen der *Wirebonds,* die bei üblichen Batterien mit *Wirebonding*-Anordnungen erforderlich ist. Darüber hinaus entfallen Kabel oder Stecker, um diese zusätzliche Leiterplatte an das Batteriemanagementsystem anzubinden. Bei der erfindungsgemäßen Batterie ist der Strompfad über die *Wirebonds* gleichzeitig der Sensorikpfad, so dass zusätzliche Leitungen beispielsweise für Spannungsabgriffe nicht erforderlich sind.

Bei der Herstellung der erfindungsgemäßen Batterie ist ein hoher Grad an Automatisierung möglich und es wird ein geringeres Gewicht und ein geringerer Bauraumbedarf im Vergleich mit herkömmlichen Batterien erreicht. Darüber hinaus ist eine sehr flexible Anordnung der einzelnen Energiespeicherelemente möglich. Durch die vorzugsweise einseitige Kontaktierung der Energiespeicherelemente ist zudem eine bessere thermische Anbindung der Energiespeicherelemente möglich. Darüber hinaus ist eine Reduzierung der Kosten durch weniger Bauteile und den vorteilhaften Fertigungsprozess möglich.

Herkömmlicherweise erfolgt die Stromführung bei einer vergleichbaren Batterie insbesondere über Busbars oder Kabel, wobei zusätzliche Messleitungen zum Messen insbesondere der Spannungen und der Temperatur mit zusätzlichen Steckern und Verbindungsstellen erforderlich sind. Diese zusätzlichen Leitungen und Stecker entfallen bei der erfindungsgemäßen Batterie. Dies reduziert mögliche Fehlerquellen, die beispielsweise durch schlechte Lötkontakte oder aufgeriebene Leitungen entstehen können.

Zusätzlich wird der Montagevorgang bei der Herstellung der erfindungsgemäßen Batterie um einige Schritte reduziert, da die Leiterplatte vorab komplett bestückt werden kann und dann nur noch auf der Anordnung der Energiespeicherelemente bzw. gegebenenfalls auf dem Zellhalter platziert und über einen *Wirebonding-*Prozess kontaktiert werden muss. Hierdurch ist ein sehr hoher Automatisierunggrad in der Fertigung möglich. Gleichzeitig wird ein zusätzliches Fehlerpotential reduziert, welches mit menschlichen Einflüssen beim manuellen Stecken verbunden ist, das bei der Fertigung von herkömmlichen Batterien in der Regel erforderlich ist.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

### KURZE BESCHREIBUNG DER ZEICHNUNGEN

In den Zeichnungen zeigen:
- Fig. 1: Seitliche Außenansicht einer bevorzugten Ausführungsform einer erfindungsgemäßen Batterie;
- Fig. 2: seitliche Ansicht einer erfindungsgemäßen Batterie mit stirnseitiger Endkappe und ohne das übrige Gehäuse;
- Fig. 3: Detailansicht der Leiterplatte mit den elektrischen Leitern zur Kontaktierung der Energiespeicherelemente bei einer erfindungsgemäßen Batterie;
- Fig. 4: seitliche Ansicht auf die Leiterplatte und die Energiespeicherelemente mit Zellhalter einer erfindungsgemäßen Batterie;
- Fig. 5: isolierte Darstellung der Leiterplatte mit umgebogener Verlängerung und stirnseitiger Endkappe; und
- Fig. 6: isolierte Darstellung der Leiterplatte.

### BESCHREIBUNG BEVORZUGTER AUSFÜHRUNGSBEISPIELE

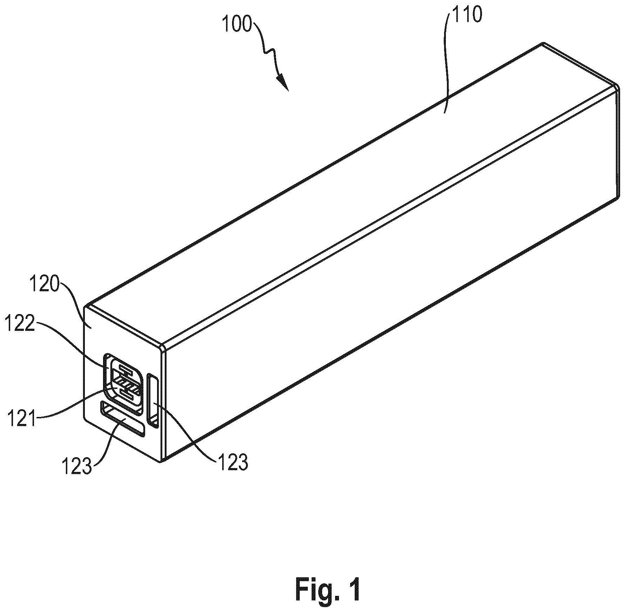

**Fig.** 1 zeigt eine Außenansicht einer bevorzugten Ausführungsform einer erfindungsgemäßen Batterie 100. Das Gehäuse der Batterie 100 umfasst einen vorzugsweise metallischen Grundkörper 110 und eine vordere stirnseitige Endkappe 120 sowie eine hintere, hier nicht sichtbare Endkappe.

Der Grundkörper 110 kann beispielsweise von einer Aluminiumröhre mit einem rechteckigen Querschnitt gebildet sein.

Innerhalb des Grundkörpers 110 sind die elektrochemischen Energiespeicherelemente der Batterie angeordnet. Vorzugsweise handelt es sich um Lithium-lonen-Zellen in Form von zylindrischen Rundzellen. Die elektrische Verschaltung der Energiespeicherelemente erfolgt über eine Leiterplatte, die vorzugsweise auch die Batteriemanagement-Elektronik trägt.

In die dem Betrachter zugewandte stirnseitige Endkappe 120 der Batterie 100 ist in dieser Ausführungsform der Batterie ein Stecker 121 integriert, über den die Strom- und Signalführung nach außen erfolgt. In dieser Ausführungsform bildet die Endkappe 120 ein endkappenförmiges Steckerbauteil. Die Endkappe 120 ist als Kunststoffspritzgussteil ausgebildet. Der Stecker 121 ist von einer umlaufenden Vertiefung 122 umgeben. Die Vertiefung 122 dient als Führung für das einzusteckende Gegenstück des Steckers.

Auf der Außenfläche der Endkappe 120 sind weiterhin zwei rinnenförmige Vertiefungen 123 vorgesehen. Diese Vertiefungen 123 bilden Halte- und/oder Führungselemente für die Halterung der Batterie 100, beispielsweise am Rahmen eines elektrischen Fahrrads. Die Vertiefungen 123 können insbesondere als Positionierhilfen für die Anbringung der Batterie 100 an dem Fahrrad dienen.

Die der Endkappe 120 gegenüberliegende Stirnseite des Gehäuses kann ebenfalls von einem Kunststoffspritzgussteil als weiterer Endkappe verschlossen sein. Alternativ können die Endstücke auch aus Aluminium oder einem anderen Metall gebildet sein.

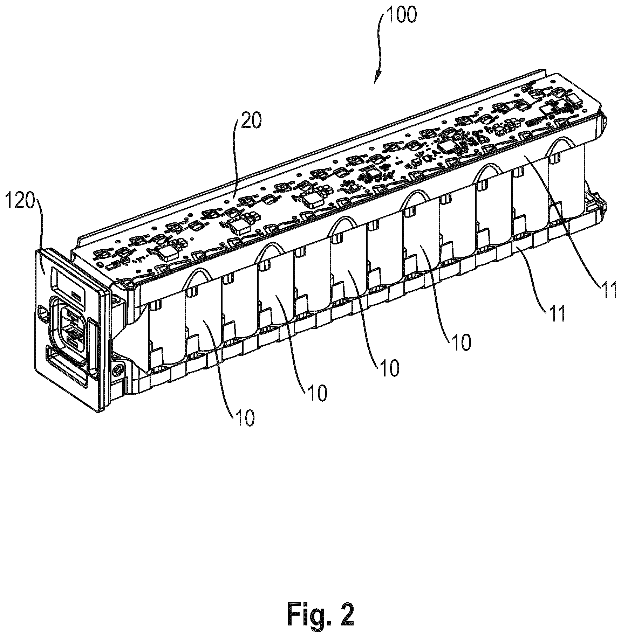

**Fig.** 2 zeigt eine seitliche Ansicht einer erfindungsgemäßen Batterie 100, wobei das Gehäuse mit Ausnahme der dem Betrachter zugewandten stirnseitigen Endkappe 120 entfernt ist. Zu erkennen sind die im Inneren der Batterie enthaltenden zylindrischen Rundzellen 10. In dieser bespielhaft gezeigten Ausführungsform sind insgesamt 39 zylindrische Rundzellen vorgesehen, die in drei Reihen zu jeweils 13 Rundzellen angeordnet sind.

Die einzelnen Rundzellen 10 stehen aufrecht und sind mit paralleler Ausrichtung der Längsachsen angeordnet. Die Rundzellen 10 werden über einen oberen und unteren Rahmen aus Kunststoff (Zellhalter 11) gehalten und fixiert.

Die elektrische Verschaltung der Rundzellen 10 erfolgt erfindungsgemäß über die Leiterplatte 20.

In dem vorderen stirnseitigen Bereich der Batterie 100 weist die Leiterplatte eine Verlängerung auf, die in einem 90°-Winkel umgebogen ist. Die umgebogene Verlängerung der Leiterplatte 20 ist auf der rückwärtigen Seite mit der stirnseitigen Endkappe 120 elektrisch kontaktiert.

Die Endkappe 120 ist in diesem Ausführungsbeispiel auf der linken Seite mit einem *Touch Button* und im oberen Bereich mit einer Ladezustands-Anzeige (SOC) ausgestattet.

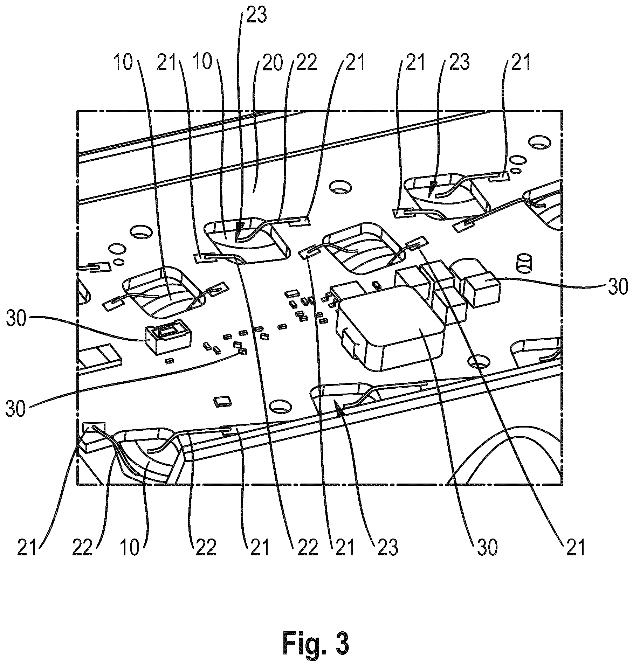

**Fig.** 3 illustriert Einzelheiten zur elektrischen Kontaktierung der Energiespeicherelemente 10 an der Leiterplatte 20. Die Leiterplatte 20 weist für jedes Energiespeicherelement 10 bzw. für jede zylindrische Rundzelle zwei Anschlusskontakte 21 auf.

Die zylindrischen Rundzellen sind so ausgebildet, dass sowohl der jeweilige positive als auch der jeweilige negative Pol der Rundzelle an der in dieser Darstellung oberen Stirnseite der Rundzelle abgegriffen werden kann. Alle Rundzellen der Batterie sind mit gleicher Ausrichtung ihrer Polaritäten innerhalb der Batterie angeordnet. Beispielsweise sind alle Rundzellen so angeordnet, dass der Pluspol nach oben bzw. in die Richtung weist, auf der die Leiterplatte 20 aufgelegt ist. Die Rundzellen sind dabei so ausgebildet, dass der positive Pol beispielsweise an einem zentral angeordneten Pin auf der Stirnseite der Zelle und der negative Pol an der Zellschulter abgegriffen werden.

In dieser Ausführungsform erfolgt die elektrische Kontaktierung der zylindrischen Rundzellen über elektrische Leiter 22 in Form von Drähten. Die Drähte 22 werden durch ein Ultraschall-Verschweißen (*Wirebonding*) mit dem jeweiligen Pol der Rundzelle und dem entsprechenden Anschlusskontakt 21 der Leiterplatte 20 verbunden.

Alle Anschlusskontakte 21 der Leiterplatte 20 befinden sich auf derjenigen Seite der Leiterplatte 20, die den zylindrischen Rundzellen abgewandt ist. Die Drähte 22 werden dafür durch eine Durchbrechung 23 durch die Leiterplatte 20 hindurch geführt.

Die Anschlusskontakte 21 und die in der Leiterplatte 20 vorgesehenen, hier nicht sichtbaren Leiterbahnen sind so ausgebildet, dass die gewünschte Konfiguration bei der Verschaltung der Rundzellen (P- und/oder S-Verschaltung) realisiert wird.

Weiterhin sind auf der Leiterplatte 20 verschiedene elektronische Bauteile 30 angeordnet, die das Batteriemanagementsystem der Batterie realisieren. Hierbei handelt es sich insbesondere um verschiedene Mess- und/oder Steuer- und/oder Schutzschaltungen, um einen oder mehrere Mikroprozessoren sowie gegebenenfalls um einen oder mehrere Spannungswandler.

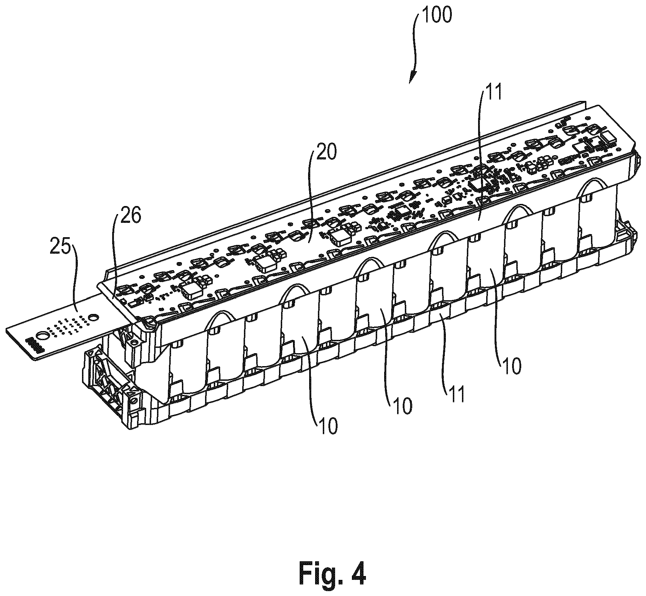

**Fig. 4** zeigt eine weitere seitliche Ansicht der Anordnung der Energiespeicherelemente 10 einer erfindungsgemäßen Batterie 100, zusammen mit dem zweiteiligen Zellhalter 11 und der Leiterplatte 20. In dem Bereich der dem Betrachter zugewandten Stirnseite der Batterie 100 befindet sich die Verlängerung 25 der Leiterplatte 20, die in dieser Darstellung sich noch in nicht gebogener Form befindet. Zwischen dem Bereich der Verlängerung 25 und der übrigen Leiterplatte 20 findet sich ein Biegebereich 26. In dem Biegebereich 26 ist das Material der Leiterplatte dünner als im übrigen Bereich ausgebildet, so dass die Leiterplatte in diesem Bereich besonders gut gebogen werden kann. Das Material der Leiterplatte kann in diesem Bereich 26 beispielsweise ausgefräst sein.

Sowohl der Strom als auch verschiedene Signale im Zusammenhang mit dem Batteriemanagement werden über den Biegebereich 26 in die Verlängerung 25 der Leiterplatte geführt und können damit in diesem stirnseitigen Bereich der Batterie 100 abgegriffen und/oder abgelesen werden. Zu diesem Zweck kann in die hier nicht dargestellte Endkappe an dieser Stirnseite der Batterie neben der Steckerfunktion beispielsweise ein *Touch Button* und/oder eine Ladezustands-Anzeige integriert sein.

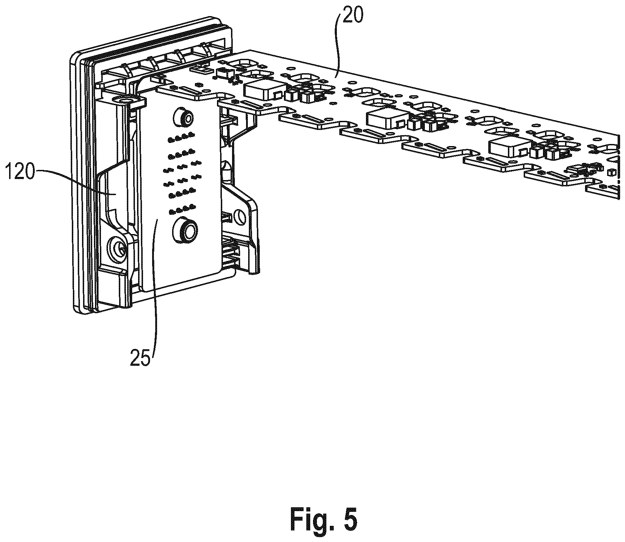

**Fig. 5** zeigt eine isolierte Darstellung der Leiterplatte 20 mit deren umgebogener Verlängerung 25 sowie die rückwärtige Seite der stirnseitigen Endkappe 120. Über die Verlängerung 25 der Leiterplatte wird der Strom der Batterie an die Steckerkontakte der stirnseitigen Endkappe 120 geleitet, sodass die Spannung von außen abgreifbar ist.

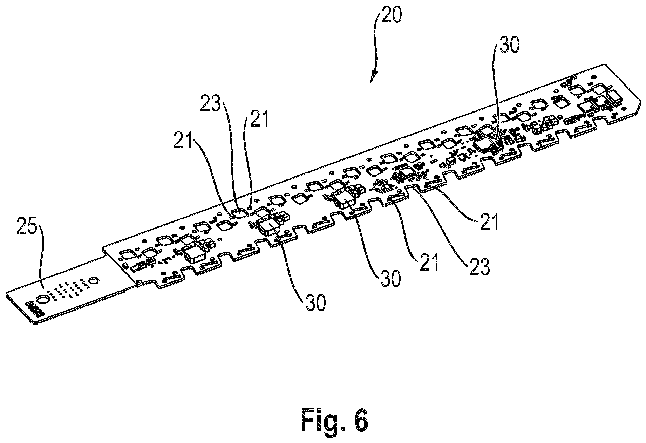

**Fig. 6** ist eine isolierte Darstellung einer erfindungsgemäßen Leiterplatte 20 mit der Verlängerung 25. Pro Energiespeicherelement der hiermit herzustellenden Batterie weist die Leiterplatte 20 zwei Anschlusskontakte 21 auf. Weiterhin ist pro Energiespeicherelement eine Durchbrechung 23 vorgesehen. Die Durchbrechung 23 kann als Loch ausgebildet sein oder die Durchbrechung 23 befindet sich in einem randständigen Bereich der Leiterplatte, so dass die Durchbrechung 23 als eine Ausbuchtung des Randes der Leiterplatte und nicht als Loch ausgebildet ist. Durch die Durchbrechungen 23 werden die elektrischen Leiter, insbesondere in Form von Drähten, geführt. Die Verbindung der elektrischen Leiter einerseits mit der Energiespeicherzelle und andererseits mit dem Anschlusskontakt 21 auf der Leiterplatte 20 erfolgt vorzugsweise durch Ultraschall-Schweißen.

Weiterhin befinden sich auf der Leiterplatte 20 die verschiedenen elektronischen Bauteile 30, die das Batteriemanagementsystem und gegebenenfalls weitere Funktionen für den Betrieb der hiermit herzustellenden Batterie realisieren.

Mit der erfindungsgemäßen Leiterplatte 20 wird ein Batteriemanagementsystem realisiert, welches Teil des zugehörigen Batteriepacks ist und welches direkt mit den einzelnen Energiespeicherelementen verschweißt ist. Damit führt die Leiterplatte 20 sowohl die Leistung der Batterie als auch die für den Betrieb der Batterie erforderlichen Messströme. Die Parallelverbünde der Energiespeicherelemente mit gleichem Potential sind durch entsprechende Leiterbahnen direkt in die Leiterplatte integriert. Auf diesem Potential liegen ebenfalls die Spannungsmesssignale und gegebenenfalls weitere Messsignale in integrierter Form vor. Die Leiterplatte stellt damit einen integrierten bestückten Stecker dar, in den die Verschaltung der Energiespeicherelemente und die Führung des Stroms und der Messsignale integriert ist. Über die Verlängerung 25 der Leiterplatte 20, die im montierten Zustand in einem Winkel von vorzugsweise 90° umgebogen ist, können der Strom und die Signale des Batteriemanagementsystems direkt auf einen, von außen zugänglichen Stecker, beispielsweise in der stirnseitigen Endkappe, übertragen werden. Weitere Verkabelungen oder andere Steckverbindungen innerhalb der Batterie sind damit nicht erforderlich.

## Patentansprüche

1. Batterie (100) mit einem Gehäuse (110, 120) und einer Mehrzahl darin angeordneter, wiederaufladbarer elektrochemischer Energiespeicherelemente (10) mit jeweils einem positiven und einem negativen Pol mit den folgenden Merkmalen:
a. Die Batterie umfasst eine Leiterplatte (20);
b. die Batterie umfasst ein Batteriemanagementsystem;
**dadurch gekennzeichnet, dass**
c. die Leiterplatte (20) für jedes der Energiespeicherelemente (10) zwei Anschlusskontakte (21) aufweist, und
d. die positiven und die negativen Pole der Energiespeicherelemente (10) über elektrische Leiter (22) mit den Anschlusskontakten (21) verbunden sind.

2. Batterie nach Anspruch 1 mit mindestens einem der folgenden zusätzlichen Merkmale:
a. Die elektrischen Leiter (22) sind Drähte.
b. Die Verbindung der positiven und der negativen Pole mit den Anschlusskontakten (21) basiert auf einem Ultraschall-Verschweißen.

3. Batterie nach Anspruch 1 oder Anspruch 2 mit mindestens einem der folgenden zusätzlichen Merkmale:
a. Die Verbindung der positiven und der negativen Pole der Energiespeicherelemente (10) mit den Anschlusskontakten (21) der Leiterplatte erfolgt an einer Seite der Energiespeicherelemente.
b. Alle Energiespeicherelemente (10) sind mit gleicher Ausrichtung ihrer Polaritäten nebeneinander angeordnet.

4. Batterie nach einem der vorhergehenden Ansprüche mit mindestens einem der folgenden zusätzlichen Merkmale:
a. Die Energiespeicherelemente (10) sind zylindrische Rundzellen mit zwei Stirnseiten und einer dazwischen liegenden Mantelfläche.
b. Die zylindrischen Rundzellen sind mit paralleler Ausrichtung ihrer jeweiligen Längsachsen nebeneinander ausgerichtet, wobei die Stirnseiten der zylindrischen Rundzellen jeweils eine Fläche aufspannen.
c. Die elektrische Leiterplatte (20) liegt auf einer der von den Stirnseiten der zylindrischen Rundzellen aufgespannten Fläche auf oder ist parallel zu dieser Fläche ausgerichtet.
d. Die Fläche der von den Stirnseiten der zylindrischen Rundzellen aufgespannten Fläche entspricht der aufliegenden oder parallel ausgerichteten Fläche der Leiterplatte (20).

5. Batterie nach einem der vorhergehenden Ansprüche mit mindestens einem der folgenden zusätzlichen Merkmale:
a. Die Leiterplatte (20) umfasst Durchbrechungen (23), durch die die elektrischen Leiter (22) geführt sind.
b. Die Energiespeicherelemente (10) und die jeweils zugehörigen Anschlusskontakte (21) sind auf entgegengesetzten Seiten der Leiterplatte (20) angeordnet.
c. Die Anschlusskontakte (21) für die Verbindung mit den positiven und negativen Polen der Energiespeicherelemente (10) liegen ausschließlich auf einer Seite der Leiterplatte (20).
d. Die Seite der Leiterplatte mit den Anschlusskontakten (21) für die Verbindung mit den positiven und negativen Polen der Energiespeicherelemente (10) ist diejenige Seite der Leiterplatte, die den Energiespeicherelementen abgewandt ist.
e. Je zwei mit einem Energiespeicherelement (10) verbundene elektrische Leiter (22) sind durch eine Durchbrechung (23) geführt.
f. Die Durchbrechungen (23) weisen eine Fläche in einem Bereich von 25 mm² bis 100 mm² auf.

6. Batterie nach einem der vorhergehenden Ansprüche mit mindestens einem der folgenden zusätzlichen Merkmale:
a. Das Gehäuse (110, 120) der Batterie weist eine Grundform mit vier oder mehr Längsseiten und einer ersten und einer zweiten Stirnseite auf.
b. Die erste Stirnseite ist von einem endkappenförmigen Steckerbauteil gebildet.

7. Batterie nach Anspruch 6 mit mindestens einem der folgenden zusätzlichen Merkmale:
a. Im Bereich der ersten Stirnseite befindet sich innerhalb des Gehäuses (110, 120) eine Verlängerung (25) der Leiterplatte, die in einem Winkel in einem Bereich von 80° bis 100°, insbesondere 90°, umgebogen ist.
b. Das endkappenförmige Steckerbauteil ist rückwärtig mit der Verlängerung (25) der Leiterplatte elektrisch kontaktiert.
c. In das endkappenförmige Steckerbauteil ist eine Ladezustands-Anzeige und/oder ein Touch Button integriert.

8. Batterie nach einem der vorhergehenden Ansprüche mit dem folgenden zusätzlichen Merkmal:
a. Das Batteriemanagementsystem umfasst eine Elektronik (30), die in die Leiterplatte integriert ist.

9. Batterie nach Anspruch 8 mit mindestens einem der folgenden zusätzlichen Merkmale:
a. Die Elektronik (30) des Batteriemanagementsystems umfasst Mess- und/oder Steuer- und/oder Schutzschaltungen.
b. Die Elektronik (30) des Batteriemanagementsystems umfasst mindestens einen Mikroprozessor zur Ansteuerung der Schaltungen.
c. Die Elektronik (30) des Batteriemanagementsystems umfasst eine Lade- und Entladeelektronik.
d. Die Elektronik (30) des Batteriemanagementsystems umfasst eine Schaltung zur gleichmäßigen Ladungsverteilung zwischen den Energiespeicherelementen.
e. Die Elektronik (30) des Batteriemanagementsystems umfasst mindestens einen Spannungswandler.

10. Batterie nach einem der vorhergehenden Ansprüche mit mindestens einem der folgenden zusätzlichen Merkmale:
a. Die Batterie ist ein Wechsel-Akkumulator.
b. Die Batterie ist ein Akkumulator für ein elektrisches Fahrzeug.
c. Die Batterie ist ein Akkumulator für ein elektrisches Fahrrad.

11. Leiterplatte (20) für eine Batterie (100) mit einem Gehäuse (110, 120) und einer Mehrzahl darin angeordneter, wiederaufladbarer elektrochemischer Energiespeicherelemente (10) mit jeweils einem positiven und einem negativen Pol, sowie einem Batteriemanagementsystem, **dadurch gekennzeichnet, dass** die Leiterplatte (20) für jedes der Energiespeicherelemente zwei Anschlusskontakte (21) aufweist, die für einen elektrischen Anschluss der positiven und negativen Pole der Energiespeicherelemente über elektrische Leiter (22) eingerichtet sind.

12. Leiterplatte nach Anspruch 11 mit mindestens einem der folgenden zusätzlichen Merkmale:
a. Die Leiterplatte umfasst Durchbrechungen (23), die zum Durchführen der elektrischen Leiter (22) vorgesehen sind.
b. Die Anschlusskontakte (21) für die positiven und negativen Pole der Energiespeicherelemente sind auf ausschließlich einer Seite der Leiterplatte angeordnet.

13. Leiterplatte nach Anspruch 11 oder Anspruch 12 mit mindestens einem der folgenden zusätzlichen Merkmale:
a. Die Leiterplatte weist eine Verlängerung (25) auf, die in einem Winkel in einem Bereich von 80° bis 100°, insbesondere 90°, umgebogen ist, wobei die Verlängerung zur elektrischen Kontaktierung mit der rückwärtigen Seite eines endkappenförmigen Steckerbauteils des Gehäuses vorgesehen ist.
b. In die Verlängerung (25) der Leiterplatte ist eine Elektronik für eine Ladezustands-Anzeige und/oder einen Touch Button an der Stirnseite des Gehäuses integriert.

14. Leiterplatte nach einem der Ansprüche 11 bis 13 mit dem folgenden zusätzlichen Merkmal:
a. Eine Elektronik (30) für das Batteriemanagementsystem ist in die Leiterplatte integriert.
